# EUROPEAN PATENT APPLICATION

(11) **EP 1 413 232 A1**
(43) Date of publication of application: **28.04.2004**
(21) Application number: 03023492.6
(22) Date of filing: 18.10.2003
(51) Int. Cl.: A47G 25/36

(54) **Procedure for realising a bimaterial garment hanger**

(30) Priority: 22.10.2002 IT vi20020225
(71) Applicant: MAINETTI Tecnologie S.p.A., I-36070 - Castelgomberto (Vicenza) (IT)
(72) Inventor: Mainetti, Mario, 36078 Valdagno (Vicenza) (IT)
(74) Representative: Bettello, Pietro, Dott. Ing.

(57) **Abstract**

A procedure suitable for realising a bimaterial garment hanger, of the type which is used to hang items of underwear and lingerie in general, in which the arched structure is made up of three portions: a central portion (2) equipped with the hook (3), sufficiently robust to support the weight of the hung item of clothing, and two side portions (4), with a smaller section with respect to the thickness of the central portion (2), shaped differently as required by the hung item of clothing. Said procedure is characterised in that the entire structure is obtained solely through at least one moulding operation.

## Description

The present finding concerns a procedure for realising a bimaterial hanger.

Clothes hangers generally used to support items of clothing with shoulders consist, in their most simple form, of a rigid structure shaped in an arch and equipped with a central hook.

One particular category of hangers consists of hangers which are usually used to hang items of underwear and lingerie in general and which generally come with a bearer structure which is small in size, light in weight and easy to handle.

Moreover, for their particular use, with widely available clothing to be hung, often so-called designer labels, hangers must satisfy two requirements: being inexpensive and, at the same time, being pleasing to the eye.

Such requirements of this type of hanger are satisfied with the realisation of a hanger in which the arched structure is made up of three portions: a central portion equipped with the hook, sufficiently robust to support the weight of the hung item of clothing and two side portions, with a smaller cross-section with respect to that of the central portion and shaped differently, in relation to the type of hook required by the hung item of clothing.

Moreover, the central portion is normally realised with a different material from that used to realise the two side portions, generally, the central part is realised in wood, whereas the ends are realised in transparent plastic material.

In the current state of the art hangers of such a type are produced by realising the three portions separately and then by gluing the two side portions onto the two sides of the central portion.

Such a production system, in particular the assembly, which is to this day realised manually, involves an end cost of the product which is too high with respect to the use for which such an object is intended, its price having to be as low as possible.

As an example we quote a so-called bimaterial hanger, in which the central portion is realised with a plastic material which has an aesthetically pleasing surface, for example made from so-called "finished wood" and on which a "logo" can also be printed which identifies and characterises the hung product, whereas the two side portions, to enhance the central portion as much as possible, are realised in transparent plastic material and take up a lamellar shape.

The purpose of the present finding is that of coming up with a procedure suitable for realising a bimaterial hanger, of the type described above, i.e. with a reinforced central portion and two lamellar side portions, which involves a low production cost, much lower with respect to the cost of similar known products, whilst still keeping the same or better aesthetics with respect to similar known hangers.

Such a purpose is obtained through a procedure which foresees the realisation of such a hanger through at least one or more moulding operation.

Operatively, in a first embodiment of the procedure according to the finding, the operation firstly foresees the moulding of a lamellar arched structure which comprises a central tab and the two side portions of the hanger itself and on which the end of the metal central hook of the finished object is embedded.

Then, in the central portion of the arched structure or "core", a shell of a different material to the base is applied, again by moulding, which forms the reinforced structure of the finished object.

Again operatively, in a second possible embodiment of the procedure according to the finding, the operation firstly foresees the moulding of the central portion with the end of the metal hook embedded.

Then the two lamellar side portions are applied, again by moulding, on the two sides of the central body.

Again operatively, in a third possible embodiment of the procedure according to the finding, the operation firstly foresees the moulding of the two side portions.

Then the two side portions are connected, again by moulding, through the central portion, in which the end of the metal hook is embedded.

The finding also concerns the product of the procedure according to the finding produced.

The product according to the finding and the procedures for realising it are made clearer through the description of a possible embodiment thereof, given as an example, with the help of the attached tables of drawings, where
- fig. 1 (Table I) represents a perspective view of the hanger according to the finding;
- figs. 2 and 3 (Table II) represent the two successive steps of a first procedure for realising the hanger;
- figs. 4 and 5 represent perspective views of the moulded product, partial and final, realised with the first procedure mentioned above;
- figs. 6 and 7 (Table III) represent the two successive steps of a second procedure for realising the hanger;
- figs. 8 and 9 represent perspective views of the moulded product, partial and final, realised with the second procedure mentioned above;
- figs. 10 and 11 (Table IV) represent the two successive steps of a third procedure for realising the hanger;
- figs. 12 and 13 represent perspective views of the moulded product, partial and final, realised with the third procedure mentioned above;

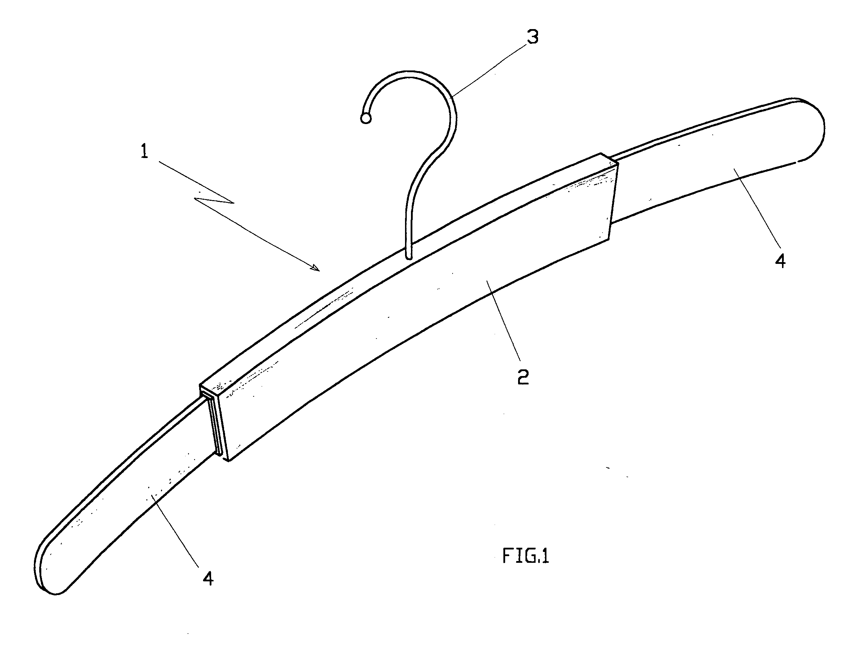

As can be seen in figure 1, the hanger according to the finding, wholly indicated with reference numeral 1, is formed from a reinforced central portion 2, equipped with the hook 3 and from two side portions 4, preferably lamellar.

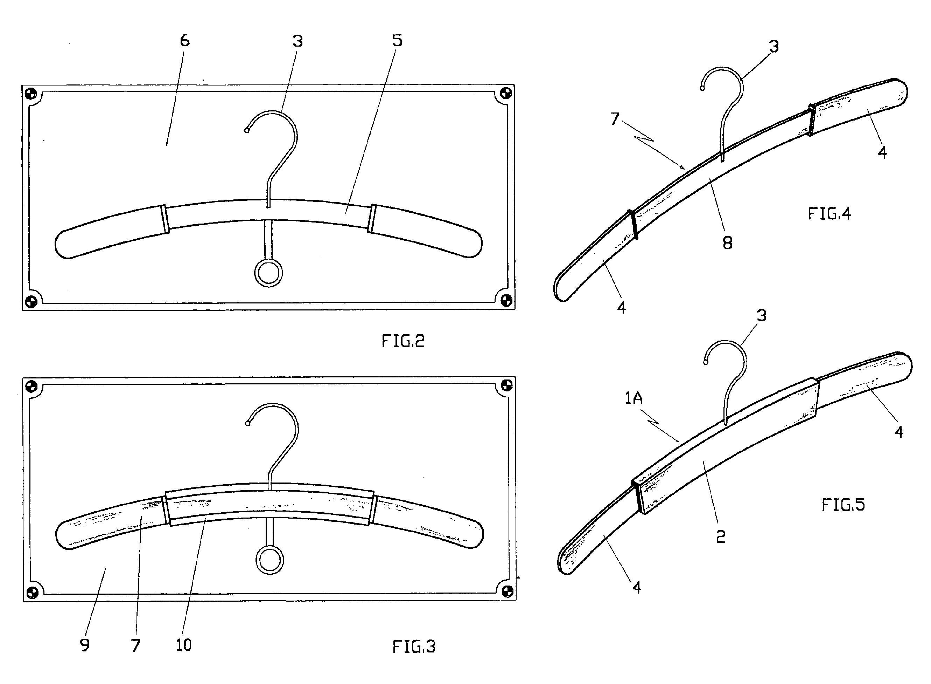

A first embodiment of the hanger according to the finding foresees that, during the first moulding step (see fig. 2), in the matrix 5 the impression 6 be formed, suitable for realising the moulded element, wholly indicated with 7, which comprises the two lamellar portions 4, joined by a central band 8, where the hook 3 is anchored (see fig. 4).

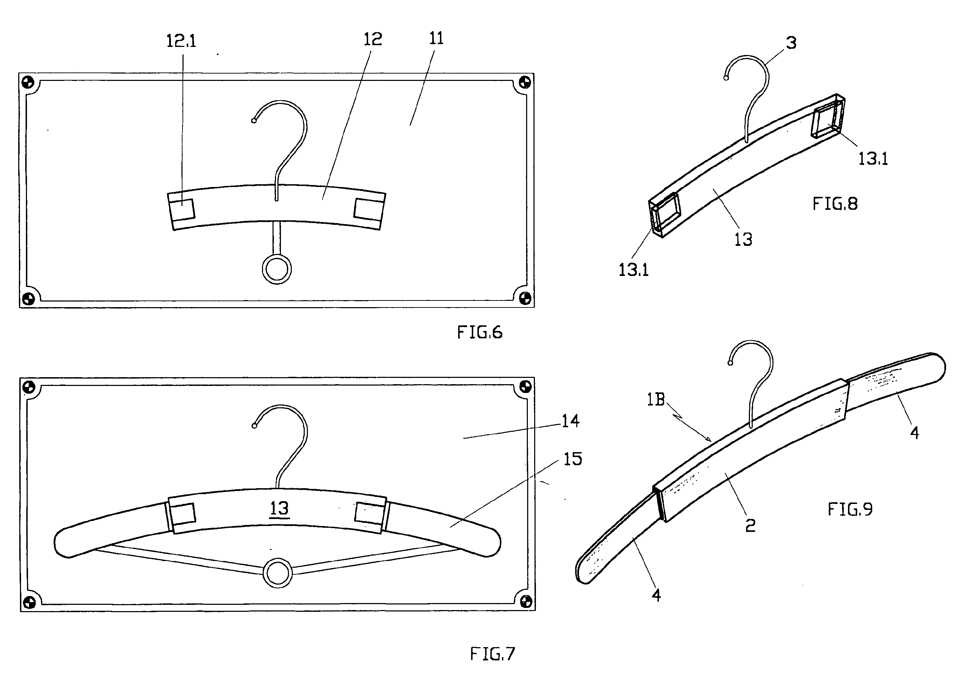

With the second moulding step (see fig. 3) in the matrix 9 the moulded element 7 is inserted associated with a central impression 10, suitable for realising the central portion 2 of the finished product 1A (see fig. 5).

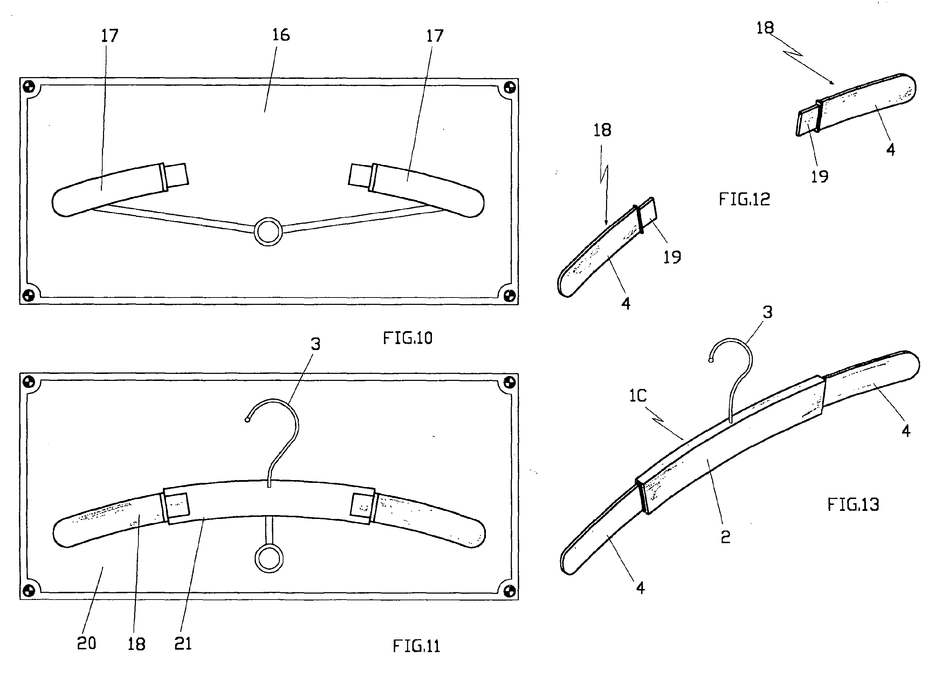

A second embodiment of the hanger according to the finding foresees that, during the first moulding step (see fig. 6), in the matrix 11 an impression 12 be formed, possibly equipped with side inserts 12.1, suitable for realising the moulded element 13, with the hook 3 embedded, which constitutes the central portion 2 of the end product; said moulded element 13, possibly equipped with two side recesses 13.1, which form the anchoring seats for the two side portions 4, moulded successively (see fig. 8).

With the second moulding step (see fig. 7) in the matrix 14 the moulded element 13 is inserted associated with two side impressions 15, suitable for realising the two side portions 4 of the finished product 1B (see fig. 9).

A third embodiment of the hanger according to the finding foresees that, during the first moulding step (see fig. 10), in the matrix 16 the impressions 17 be formed, suitable for realising the moulded elements 18, which comprises the side portions 4, possibly equipped with projecting blocks 19, of the end product (see fig. 12).

With the second moulding step (see fig. 11) in the matrix 20 the moulded elements 18 and a metal hook 3 are inserted, all associated with a central impression 21, suitable for realising the central portion 2 of the finished product 1C (see fig. 13).

Of course, embodiments different from those described are possible according to the type of hanger to be produced, (in such a case the two side portions shall be shaped differently) or according to its aesthetic value (particular configuration or look of the central portion), without for this reason departing from the scope of the claims, defined hereafter.

## Claims

1. PROCEDURE FOR REALISING A BIMATERIAL HANGER, of the type which is used to hang items of underwear and lingerie in general, in which the arched structure is made up of three portions: a central portion (2) equipped with the hook (3), sufficiently robust to support the weight of the hung item of clothing and two side portions (4), with a smaller section with respect to the thickness of the central portion, shaped differently in relation to the type of hook required by the hung item of clothing,
said procedure being **characterised in that**
the entire structure is obtained solely through at least one moulding operation.

2. PROCEDURE FOR REALISING A BIMATERIAL HANGER, according to claim 1, **characterised in that** it firstly foresees the moulding of a lamellar arched structure (7), which comprises a central tab (8) on which the end of the metal hook (3) is embedded and two side portions (4); then on said arched structure or "core" a shell of material different to the base, which forms the reinforced structure (2) of the finished object (1A), is applied, again by moulding, at the aforementioned central portion.

3. PROCEDURE FOR REALISING A BIMATERIAL HANGER, according to claim 1, **characterised in that** it firstly foresees the moulding of an element (13), which constitutes the central portion (2) with the metal hook (3) embedded, possibly equipped with the side recesses (13.1); then the two lamellar side portions (4) are applied, again by moulding, on the two sides of the aforementioned portion or central body, to form the finished object (1B).

4. PROCEDURE FOR REALISING A BIMATERIAL HANGER, according to claim 1, **characterised in that** it firstly foresees the moulding of two elements (18), possibly equipped with projecting blocks (19), which constitute the two side portions (4); then the central portion (2) is applied, again by moulding, to the moulded elements (18) and to the metal hook (3), to form the finished product (1C).

5. BIMATERIAL HANGER, of the type which is used to hang items of underwear and lingerie in general, in which the arched structure is made up of three portions: a central portion (2) equipped with the hook (3), sufficiently robust to support the weight of the hung item of clothing and two side portions (4), with a smaller section with respect to the thickness of the central portion, shaped differently in relation to the type of hook required by the hung item of clothing, **characterised in that** it is realised through a procedure according to one or more of claims 1 to 4.
